## Europäisches Patentamt

## European Patent Office

## Office européen des brevets

(19)

(11) Veröffentlichungsnummer: **0 103 092**
**B1**

(12) **EUROPÄISCHE PATENTSCHRIFT**

(45) Veröffentlichungstag der Patentschrift:
**16.10.85**

(51) Int. Cl.⁴: **B 65 G 37/00,** B 21 D 43/12

(21) Anmeldenummer: **83106602.2**

(22) Anmeldetag: **06.07.83**

(54) **Aufnahmevorrichtung für gestapelte Formteile.**

(30) Priorität: **27.08.82 DE 3231964**

(43) Veröffentlichungstag der Anmeldung:
**21.03.84 Patentblatt 84/12**

(45) Bekanntmachung des Hinweises auf die Patenterteilung:
**16.10.85 Patentblatt 85/42**

(84) Benannte Vertragsstaaten:
**BE FR GB IT NL SE**

(56) Entgegenhaltungen:
**CH - A - 400 902**
**DE - B - 2 433 600**
**US - A - 1 740 607**

(73) Patentinhaber: **Gerlach, Karl, Odenwaldstrasse 22,
D-6096 Raunheim (DE)**

(72) Erfinder: **Gerlach, Karl, Odenwaldstrasse 22,
D-6096 Raunheim (DE)**

(74) Vertreter: **Katscher, Helmut, Dipl.-Ing.,
Bismarckstrasse 29, D-6100 Darmstadt (DE)**

# Beschreibung

Die Erfindung betrifft eine Aufnahmevorrichtung für gestapelte Formteile mit einem Rahmengestell.

Bei der Herstellung von Karosserieteilen im Automobilbau, die hier als Beispiel für Formteile genannt werden, werden ausgehend von ebenen Blechzuschnitten im allgemeinen mehrere Bearbeitungsgänge ausgeführt, zu denen ein oder mehrere Tiefzieh- und Stanzvorgänge gehören. Nach der Bearbeitung müssen die tiefgezogenen Blechplatinen gestapelt und zur nächsten Bearbeitungsstation transportiert werden. Dort müssen die tiefgezogenen Blechplatinen einzeln aus dem Stapel entnommen werden, um der nächsten Bearbeitung zugeführt zu werden. In ähnlicher Weise müssen auch andere Formteile, beispielsweise aus Kunststoff, gestapelt und später wieder aus dem Stapel entnommen werden. Eine solche Aufnahmevorrichtung für gestapelte Formteile ist Stand der Technik.

Die Einzelentnahme der Formteile aus einem Stapel macht Handarbeit erforderlich, weil die Formteile nicht mit ausreichender Genauigkeit und Zuverlässigkeit von einem Handhabungsgerät erfasst werden können. Während die Taktfolge der zugeordneten Bearbeitungsmaschinen immer weiter gesteigert werden konnte, liess sich eine Steigerung der Arbeitsgeschwindigkeit beim Zuführen der Formteile auch mit verhätlnismässig hohem Personalaufwand nicht in gleichem Masse erreichen.

Auch die Zwischenlagerung von Formteilen zwischen zwei Bearbeitungsstationen war bisher mit grossem Aufwand an Platz und Arbeit verbunden.

Aufgabe der Erfindung ist es daher, eine Aufnahmevorrichtung für Formteile zu schaffen, die es ermöglicht, die Formteile mit geringem Platzbedarf in gestapelter und genau ausgerichteter Anordnung aufzunehmen und eine zuverlässige Einzelentnahme durch automatisch arbeitende Handhabungsgeräte zu ermöglichen.

Diese Aufgabe wird erfindungsgemäss dadurch gelöst, dass an zwei gegenüberliegenden Seiten des Rahmengestells der Aufnahmevorrichtung über die gesamte Stapelhöhe verlaufende, an ihren beiden Enden über drehbare Kettenräder umgelenkte Förderketten angeordnet sind, dass in gleichmässigen Abständen angeordnete Kettenglieder der Förderketten zum Inneren des Rahmengestells vorspringende Tragzapfen aufweisen, und dass die Förderketten über mindestens eine lösbare Drehkupplung mit mindestens einem unabhängig vom Rahmengestell angeordneten, schrittweise schaltbaren Drehantrieb verbindbar sind.

Die Formteile werden hierbei mit ihren beiden gegenüberliegenden Rändern jeweils auf den Tragzapfen aufgenommen, so dass sich die Formteile in jeweils vorgegebenen Abständen zueinander befinden. Dadurch wird einerseits der zur Verfügung stehende Raum optimal ausgenutzt, andererseits besteht aber keine Gefahr, dass sich die Formteile ineinander verklemmen oder verkeilen, so dass eine sichere Einzelentnahme ermöglicht wird.

Mittels der Förderketten kann der gesamte im Rahmengestell aufgenommene Stapel schrittweise so gefördert werden, dass die Be- oder Entladung jeweils an einem Ende des Rahmengestells erfolgt. Das jeweils aufzunehmende oder zu entnehmende Formteil befindet sich daher immer in der gleichen Position am Ende des Rahmengestells, so dass der Bewegungsablauf eines zugeordneten Handhabungsgeräts, beispielsweise eines Greifers, genau auf diese Position ausgerichtet werden kann. Dadurch wird eine genau zentrierte Aufnahme des Formteils durch das Handhabungsgerät ermöglicht, wodurch wiederum eine genau zentrierte Abgabe des Formteils an die zugeordnete Bearbeitungsmaschine ermöglicht wird. Dadurch kann die Manipulation der Formteile vollständig mechanisiert werden, wodurch eine Steigerung der Arbeitsgeschwindigkeit zur Anpassung an die Taktfolge der jeweils zugeordneten Bearbeitungsmaschinen ermöglicht wird. Die sich durch die Manipulation der Formteile von Hand ergebenden Unfallgefahren werden dadurch ausgeschlossen.

Mit der Erfindung wird daher eine Aufnahmevorrichtung für automatisches Be- und Entladen von Formteilen geschaffen. Nach dem Bearbeitungsvorgang können die bearbeiteten Formteile mit dieser Vorrichtung automatisch in der gleichen Taktzeit des Bearbeitungsvorgangs ohne Teilbeschädigung gestapelt werden. Zur weiteren Bearbeitung, z. B. an Schweissstrassen, können die Formteile vollautomatisch in der Taktzeit des Bearbeitungsvorgangs entstapelt und der Bearbeitung zugeführt werden.

Das die Formteile aufnehmende Rahmengestell kann wie ein Container oder eine Palette transportiert und gelagert werden, z. B. in einem Hochregallager. Da der Drehantrieb nicht am Rahmengestell, sondern an der jeweiligen Be- oder Entladestation angeordnet ist, ist der Bauaufwand für das Rahmengestell verhältnismässig gering, so dass eine grosse Anzahl von derartigen Rahmengestellen zur Aufnahme und Zwischenlagerung von Formteilen bereitgehalten werden kann. Das Rahmengestell kann selbst stapelbar ausgeführt werden.

Vorzugsweise ist der Drehantrieb an einer Be- oder Entladestation angeordnet und axial verschiebbar, so dass er mit der Drehkupplung der Förderketten in Eingriff gebracht werden kann, sobald sich das Rahmengestell in der Be- oder Entladestation befindet.

Um den gemeinsamen Antrieb mehrerer, vorzugsweise zweier Förderketten auf einer Seite des Rahmengestells zu ermöglichen, sind diese Förderketten durch eine gemeinsame Welle miteinander verbunden, die auch die Drehkupplung trägt.

In Weiterbildung des Erfindungsgedankens ist vorgesehen, dass am Rahmengestell eine in und ausser Eingriff mit der Förderkette bringbare Kettenarretierung vorgesehen ist. Die Kettenarretierung verhindert eine unbeabsichtigte Bewegung der Förderketten, solange der Drehantrieb nicht angekuppelt ist.

Als besonders vorteilhaft hat es sich erwiesen, die Kettenarretierung so auszuführen, dass sie durch einen zusammen mit dem Drehantrieb axial verschiebbaren Anchlag betätigbar ist. Dadurch wird erreicht, dass die Kettenarretierung selbsttätig gelöst wird, sobald der Drehantrieb angekuppelt ist, dass die Kettenarretierung aber auch selbsttätig zum Eingriff mit der Förderkette kommt, sobald der Drehantrieb wieder abgekuppelt wird.

Weitere vorteilhafte Ausgestaltung des Erfindungsgedankens sind Gegenstand von Unteransprüchen.

Die Erfindung wird nachfolgend an einem Ausführungsbeispiel näher erläutert, das in der Zeichnung dargestellt ist. Es zeigt:

Fig. 1 ein mit Formteilen bestücktes Rahmengestell in der Transport- und Lagerstellung in einer Seitenansicht,

Fig. 2 eine Seitenansicht des Rahmengestells nach Fig. 1 in einer Be- bzw. Entladestation mit einem seitlich angeordneten Drehantrieb und einer Kippvorrichtung,

Fig. 3 eine vergrösserte Teilansicht einer Förderkette im Bereich eines Umlenk-Kettenrades, und

Fig. 4 einen vergrösserten Teilschnitt längs der Linie IV-IV in Fig. 2.

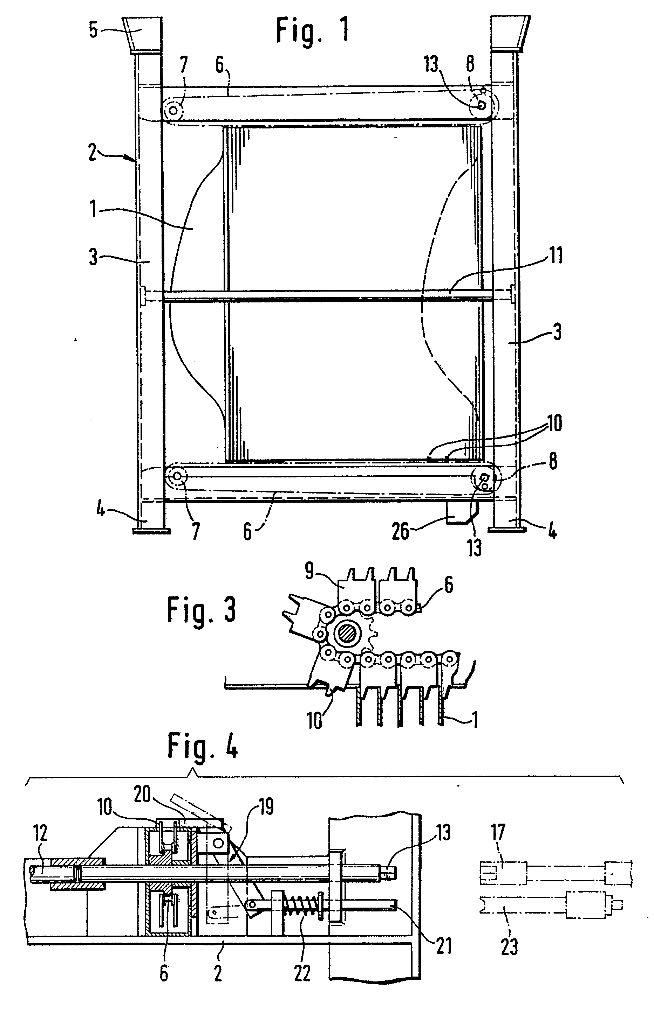

Ein Stapel von tiefgezogenen Formteilen ist in dem in Fig. 1 gezeigten Rahmengestell 2 aufgenommen. An den Enden der an den Seitenkanten des Rahmengestells 2 angeordneten Gestellständern 3 sind beim gezeigten Ausführungsbeispiel Ständerfüsse 4 bzw. am anderen Ende Stapeltaschen 5 angeordnet, die zur Aufnahme der Ständerfüsse 4 eines darüber anzuordnenden weiteren Rahmengestells 2 dienen. Anstelle der Ständerfüsse 4 können auch Räder vorgesehen werden, um das Rahmengestell 2 verfahrbar zu machen.

An zwei einander gegenüberliegenden Seiten des Rahmengestells 2 (in Fig. 1 oben und unten) sind als Gliederketten ausgeführte Förderketten 6 vorgesehen, die an ihren beiden Enden über Kettenräder 7, 8 umgelenkt werden. Jeweils in gleichbleibenden Abständen weisen die Kettenglieder 9 (Fig. 3) der Förderketten 6 zum Inneren des Rahmengestells 2 vorspringende Tragzapfen 10 auf, die hinter die Ränder der Formteile 1 greifen und diese in der vorgegebenen Stellung halten.

Im Rahmengestell 2 sind aufeinander gegenüberliegenden Seiten Führungsrohre 11 angebracht, die eine seitliche Führung und Halterung des Stapels von aufgenommenen Formteilen 1 bewirken.

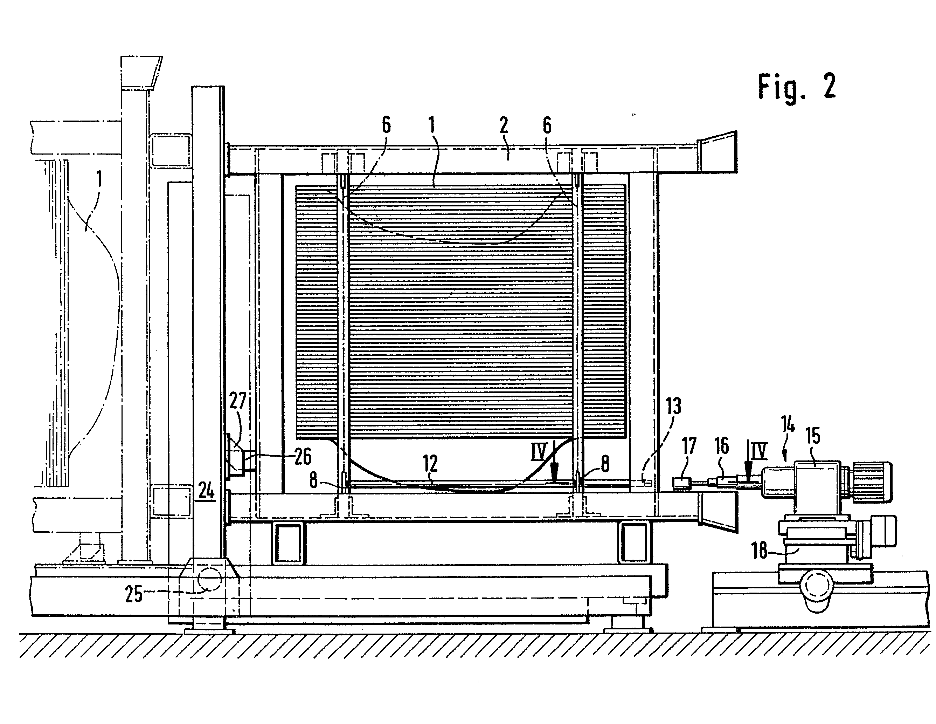

Wie man aus Fig. 2 erkennt, sind die beiden Förderketten 6 auf jeweils einer Seite des Rahmengestells 2 an ihren Kettenrädern 8 durch eine gemeinsame Welle 12 verbunden, die als starre Welle oder biegsame Welle ausgeführt sein kann. Die Welle 12 trägt an ihrem freien Ende eine Drehkupplung 13. Wie in Fig. 4 angedeutet, kann es sich dabei beispielsweise um einen Vierkant handeln.

An der Be- und Entladestation, die in Fig. 2 dargestellt ist, befindet sich ein Drehantrieb 14, der einen Getriebemotor 15 aufweist, dessen Ausgangswelle 16 mit einem auf die Drehkupplung 13 passenden Kupplungsgegenstück 17 versehen ist. Der Drehantrieb 14 ist auf einem Kreuzschlitten 18 axial verfahrbar und quer zu seiner Achsrichtung verstellbar.

In Fig. 4 ist gezeigt, dass im Rahmengestell 2 unmittelbar neben der Förderkette 6 ein Arretierungshebel 19 schwenkbar gelagert ist, der mit einer Arretierungsklinke 20 in und ausser Eingriff mit den Tragzapfen 10 der Förderkette 6 gebracht werden kann. Der Arretierungshebel 19 ist gelenkig mit einem Stössel 21 verbunden, der sich über eine Druckfeder 22 am Rahmengestell 2 abstützt und der in geringem Abstand neben der Drehkupplung 13 endet.

Der Drehantrieb 14 weist neben dem Kupplungsteil 17 einen in Fig. 4 angedeuteten Anschlag 23 auf, der zusammen mit dem Kupplungsstück 17 axial verfahrbar ist. Wenn das Kupplungsstück 17 mit der Drehkupplung 13 in Eingriff gebracht wird, löst der Anschlag 23 über den Stössel 21 die Kettenarretierung 19, 20, so dass die Förderketten 6 durch den Drehantrieb 15 schrittweise angetrieben werden können, um jeweils ein Formteil 1 in der Endstellung zu entnehmen bzw. einzusetzen. Ein in der Zeichnung nicht dargestellter, vorzugsweise optisch arbeitender Taster erfasst die Stellung des jeweils obersten Formteils und steuert den Drehantrieb 15.

Wie man aus Fig. 2 erkennt, ist das Rahmengestell 2 in der Be- oder Entladestation auf einer schwenkbaren Kuppbühne 24 aufgenommen, die aus zwei im rechten Winkel zueinander stehenden Bühnenteilen besteht. Die Kippbühne 24 ist mittels eines (nicht dargestellten) Kippantriebs um eine horizontale Kippachse 25 aus der rechts in Fig. 2 gezeigten Stellung, in der die Formteile 1 horizontal liegen, um 90° in die links in Fig. 2 mit strichpunktierten Linien angedeutete Stellung kippbar, die der Stellung nach Fig. 1 entspricht, wobei die Formteile 1 vertikal angeordnet sind. In dieser Stellung wird das Rahmengestell transportiert und gelagert. Bei vertikaler Anordnung der Formteile 1 besteht auch bei aus sehr dünnen Blech bestehenden Formteilen 1 keine Gefahr, dass diese durchhängen und sich dabei in unerwünschter Weise verformen.

Das Rahmengestell 2 ist mit einem Zentriervorsprung 26 versehen, der in der Be- oder Entladestation (Fig. 2) mit einem Zentriergegenstück 27 zusammenwirkt, um eine genaue Zentrierung des in der Be- oder Entladestation aufgenommenen Rahmengestells 2 zu bewirken. Dadurch ist sichergestellt, dass sich das jeweils oberste Formteil 1 des Stapels in einer räumlich genau festgelegten Stellung befindet, wenn sie durch einen Greifer übernommen wird. Dadurch ist wiederum sichergestellt, dass der Greifer das Formteil in genau ausgerichteter Stellung an die zugeordnete Bearbeitungsmaschine übergibt.

Bei dem dargestellten Ausführungsbeispiel sind in der Be- und Entladestation (Fig. 2) im Abstand nebeneinander zwei Drehantriebe 14 vorgesehen, die mit den auf beiden Seiten des Rahmengestells 2 angeordneten Förderketten 6 in der beschriebenen Weise in Antriebsverbindung gebracht werden können, um diese im Gleichlauf anzutreiben. Die beiden Drehantriebe 14 können in ihrem gegenseitigen Abstand zur Anpassung an unterschiedliche Abmessungen der aufzunehmenden Rahmengestelle 2 verstellt werden. Die Abmessungen und auch die Form der verwendeten Rahmengestelle 2 richten sich nach den Abmessungen und der Form der aufzunehmenden Formteile 1. Beim dargestellten Ausführungsbeispiel handelt es sich hierbei um rechteckige Formteile; es versteht sich aber, dass beispielsweise auch trapezförmige Formteile aufgenommen werden können, wobei dann die Anordnung der Förderketten 6 entsprechend geändert wird. Wenn die auf einer Seite angeordneten Förderketten 6 gegeneinander versetzt oder im Winkel zueinander angeordnet sind, wird eine Ausführung bevorzugt, bei der die die Förderketten 6 verbindende Welle 12 als biegsame Welle oder Gelenkwelle ausgeführt ist.

Anstelle von tiefgezogenen Blechteilen, wie beim beschriebenen Ausführungsbeispiel, können auch andere Formteile mit der geschilderten Vorrichtung gestapelt und entnommen werden, beispielsweise Spritzteile aus Kunststoff.

## Patentansprüche

1. Aufnahmevorrichtung für gestapelte Formteile mit einem Rahmengestell, dadurch gekennzeichnet, dass an zwei gegenüberliegenden Seiten des Rahmengestells (2) über die gesamte Stapelhöhe verlaufende, an ihren beiden Enden über drehbare Kettenräder (7, 8) umgelenkte Förderketten (6) angeordnet sind, dass in gleichmässigen Abständen angeorndete Kettenglieder (9) der Förderketten (6) zum Inneren des Rahmengestells (2) vorspringende Tragzapfen (10) aufweisen, und dass die Förderketten (6) über mindestens eine lösbare Drehkupplung (13) mit mindestens einem unabgängig vom Rahmengestell (2) angeordneten, schrittweise schaltbaren Drehantrieb (14) verbindbar sind.

2. Aufnahmevorrichtung nach Anspruch 1, dadurch gekennzeichnet, dass der Drehantrieb (14) an einer Be- oder Entladestation angeordnet und axial verschiebbar ist.

3. Aufnahmevorrichtung nach Anspruch 1, dadurch gekennzeichnet, dass jeweils die Förderketten (6) einer Seite des Rahmengestells (2) durch eine gemeinsame Welle (12) miteinander verbunden sind, die auch die Drehkupplung (13) trägt.

4. Aufnahmevorrichtung nach einem der Ansprüche 1 bis 3, dadurch gekennzeichnet, dass am Rahmengestell (2) eine in und ausser Eingriff mit der Förderkette (6) bringbare Kettenarretierung (19, 20) vorgesehen ist.

5. Aufnahmevorrichtung nach Ansprüchen 3 und 4, dadurch gekennzeichnet, dass die Kettenarretierung (19, 20) durch einen zusammen mit dem Drehantrieb (14) axial verschiebbaren Anschlag (23) betätigbar ist.

6. Aufnahmevorrichtung nach Anspruch 1, dadurch gekennzeichnet, dass in der Be- oder Entladestation eine das Rahmengestell (2) aufnehmende und zusammen mit diesem um eine horizontale Achse (25) um 90° kippbare Kuppbühne (24) angeordnet ist.

7. Aufnahmevorrichtung nach Anspruch 6, dadurch gekennzeichnet, dass das Rahmengestell (2) mit einer Zentriervorrichtung (26, 27) versehen ist.

## Claims

1. A reception unit intended for stacked formed parts and provided with a frame, characterised in that there are arranged on two opposite sides of the frame (2) conveying chains (6) which extend over the entire stack height and which are deflected at their two ends via rotatable sprocket wheels (7, 8), and in that equally spaced chain links (9) of the conveying chains (6) comprise supporting journals (10) which project towards the interior of the frame (2), and in that the conveying chains (6) are connectable to at least one rotating drive (14), which is arranged independently of the frame (2) and can be operated step by step, via at least one disengaging rotary coupling (13).

2. A reception unit as claimed in Claim 1, characterised in that the rotating drive (14) is arranged on a loading or unloading station and is axially displaceable.

3. A reception unit as claimed in Claim 1, characterised in that the conveying chains (6) of one side of the frame (2) are connected by a joint shaft (12) which also carries the rotary coupling (13).

4. A reception unit as claimed in one of Claims 1 to 3, characterised in that a chain locking device (19, 20) which can be engaged with and disengaged from the conveying chain (6), is provided on the frame (2).

5. A reception unit as claimed in Claims 3 and 4, characterised in that the chain locking device (19, 20) is actuatable by a stop (23) which is axially displaceable together with the rotating drive (14).

6. A reception unit as claimed in Claim 1, characterised in that there is arranged in the loading or unloading station a tilting platform (24) which receives the frame (2) and can be tilted through 90°, together with the frame, about a horizontal axis (25).

7. A reception unit as claimed in Claim 6, characterised in that the frame (2) is provided with a centring device (26, 27).

## Revendications

1. Dispositif de levage à châssis pour éléments mis en forme empilés, caractérisé en ce que, aux deux côtés opposés du châssis (2), courant sur toute la hauteur de la pile, à leurs deux extrémités, sont placées des chaînes de transport (6) tournées autour de roues à chaînes rotatives (7, 8), en ce que, à intervalles réguliers, les maillons (9) des chaînes de transport (9) présentent des tourillons (10) débordant vers l'intérieur du châssis, et en ce que lesdites chaînes de transport (6) sont aptes à se relier à au moins un dispositif d'entraînement rotatif (14) enclenchable pas à pas, disposé indépendamment du châssis (2), par au moins un accouplement rotatif (13) déconnectable.

2. Dispositif de levage selon la revendication 1, caractérisé en ce que le dispositif rotatif d'entraînement (14) est placé à un poste de chargement ou déchargement et déplaçable axialement.

3. Dispositif de levage selon la revendication 1, caractérisé en ce que les chaînes de transport (6) sont chaque fois reliées entre elles d'un côté du châssis (2) par un arbre commun (12), qui porte également l'accouplement rotatif (13).

4. Dispositif de levage selon l'une des revendications 1 à 4, caractérisé en ce qu'un dispositif d'arrêt de châssis (19, 20) amenable en et hors de prise avec la chaîne de transport (6) est prévu sur le châssis.

5. Dispositif de levage selon les revendications 3 et 4, caractérisé en ce que le dispositif d'arrêt de chaîne (19, 20) est actionnable au moyen d'un cliquet (23) déplaçable axialement en même temps que le dispositif rotatif d'entraînement (14).

6. Dispositif de levage selon la revendication 1, caractérisé en ce qu'un socle (24) portant le châssis (2) et basculable avec lui de 90° autour d'un axe horizontal (25) est disposé au poste de chargement ou déchargement.

7. Dispositif de levage selon la revendication 6, caractérisé en ce que le châssis (2) est équipé d'un dispositif de centrage (26, 27).

**Fig. 1**

**Fig. 3**

**Fig. 4**

Fig. 2

0 103 092